# EUROPEAN PATENT SPECIFICATION

(11) **EP 3 313 614 B1**
(45) Date of publication and mention of the grant of the patent: **05.11.2025**
(21) Application number: 16815259.3
(22) Date of filing: 23.06.2016
(51) Int. Cl.: B24D 18/00, B24D 3/06, B24D 3/34, B24D 5/02, B24D 7/02, B24D 11/00, B24D 5/10, B24D 7/10, B24D 7/14, B24D 3/14, B29C 64/165

(54) **METHODS OF MAKING VITREOUS BOND ABRASIVE ARTICLES**
VERFAHREN ZUR HERSTELLUNG GLASGEBUNDENER SCHLEIFARTIKELN
PROCÉDÉS DE FABRICATION DES ARTICLES ABRASIFS À LIANT VITRIFIÉ

(30) Priority: 25.06.2015 US 201562184695 P
(43) Date of publication of application: 02.05.2018
(73) Proprietor: 3M Innovative Properties Company, St. Paul, MN 55133-3427 (US)
(72) Inventor: FRANKE, Carsten, Saint Paul, Minnesota 55133-3427 (US); SMITHSON, Robert L. W., Saint Paul, Minnesota 55133-3427 (US); GOERS, Brian D., Saint Paul, Minnesota 55133-3427 (US); ADEFRIS, Negus B., Saint Paul, Minnesota 55133-3427 (US); GIVOT, Maiken, Saint Paul, Minnesota 55133-3427 (US); ANDERSON, Thomas J., Saint Paul, Minnesota 55133-3427 (US); KEIPERT, Steven J., Saint Paul, Minnesota 55133-3427 (US)
(74) Representative: Vossius & Partner Patentanwälte Rechtsanwälte mbB
(86) International application number: PCT/US2016/038902
(87) International publication number: WO 2016/210057

(56) References cited:
- EP-A1- 2 879 837
- EP-B1- 1 851 005
- EP-B1- 2 879 837
- WO-A1-2014/070468
- WO-A2-2011/028700
- CN-Y- 201 419 362
- JP-A- S4 977 293
- KR-A- 20090 013 366
- US-A- 5 178 644
- US-A- 5 340 656
- US-A- 6 123 744
- US-A1- 2003 205 239
- US-A1- 2006 185 256
- US-A1- 2006 208 388
- US-A1- 2007 241 482
- US-A1- 2010 040 767

## Description

### TECHNICAL FIELD

The present disclosure broadly relates to methods of making abrasive articles having abrasive particles in a vitreous bonding matrix.

### BACKGROUND

Traditionally, vitrified bond abrasive articles (e.g., abrasive wheels, abrasive segments, and whetstones) are made by compressing a blend of abrasive particles (e.g., diamond, cubic boron nitride, alumina, or SiC), a vitreous bond precursor (e.g., glass frit, ceramic precursor) an optional pore inducer (e.g., glass bubbles, naphthalene, crushed coconut or walnut shells, or acrylic glass or PMMA), and a temporary organic binder in a liquid vehicle (e.g., aqueous solutions of phenolic resin, polyvinyl alcohol, urea-formaldehyde resin, or dextrin). The abrasive particles, vitreous bond precursor, and usually the pore inducer are typically dry blended together. The temporary organic binder solution is then added to wet out the grain mix. The blended mix is then placed in a hardened steel mold treated with a mold release, and then heated until the vitreous bond precursor is converted into a vitreous bond matrix (also referred to in the art as "vitreous bond" and "vitreous binder".

There are many disadvantages to this manufacturing approach: each abrasive article shape requires a specialized mold; the molds typically are expensive and have a long lead time to make; any design change requires the manufacture of a new mold; there are limitations to the shapes that can be molded, complicated shapes with undercuts or internal structures such as cooling channels are generally not possible; molds wear out and have a limited number of units that can be manufactured per mold; while the molds are filled with the abrasive mixture, separation of the components can occur, leading to inhomogeneous abrasive components and density variation, which is easily visible. Moreover, the process is manual and labor intensive.

Powder bed binder jetting is an additive manufacturing, or "3D printing" technology, in which a thin layer of a powder is temporarily bonded at desired locations by a liquid binder mixture. Typically, that binder mixture is dispensed by an inkjet printing head, and consists of a polymer dissolved in a suitable solvent or carrier solution. In one method, the binder is a powder which is mixed with the other powder, or coated onto the powder and dried, and then an activating liquid, such as water or a solvent mixture, is jetted onto the powder, activating the binder in select areas.

The printed powder layer is then at least partially dried and lowered so that a next powder layer can be spread. The powder spreading, bonding and drying processes can be repeated until the full object is created. The object and surrounding powder is removed from the printer and often dried or cured to impart additional strength so that the now hardened object can be extracted from the surrounding powder. EP 1 851 005 B1 discloses a coated abrasive article which includes a substrate and a patterned set of abrasive structures. Each abrasive structure of the patterned set of abrasive structures has an engineered microfeature.

### SUMMARY

An exemplary method to manufacture said abrasive structure in EP 1 851 005 B1 is by printing binder over powder layers in a particular pattern.

The subject-matter of the present invention is defined in independent claim 1. Further embodiments of the invention are defined in the dependent claims.

Accordingly, in another aspect, the present disclosure provides a vitreous bond abrasive article, not part of the claimed invention, comprising a vitreous bond material having abrasive particles retained therein, wherein the vitreous bond abrasive article has at least one tortuous cooling channel extending at least partially therethrough.

In yet another aspect, the present disclosure provides a vitreous bond abrasive article, not part of the present claimed invention, comprising a vitreous bond material having abrasive particles retained therein, wherein the vitreous bond abrasive article has at least one arcuate cooling channel extending at least partially therethrough.

In yet another aspect, the present disclosure provides a vitreous bond abrasive article precursor, not part of said claimed invention, comprising abrasive particles bonded together by a vitreous bond precursor material, wherein the vitreous bond abrasive article precursor further comprises at least one of:
at least one tortuous cooling channel extending at least partially through the vitreous bond abrasive article precursor; or
at least one arcuate cooling channel extending at least partially through the vitreous bond abrasive article precursor.

In yet another aspect, the present disclosure provides a unitary structured abrasive disc, not part of said claimed invention, comprising:
a planar ceramic base having a working major surface; and
precisely-shaped ceramic abrasive elements extending from the working major surface, wherein the precisely-shaped ceramic abrasive elements and the planar ceramic base form a unitary body.

In a twenty-second embodiment, the present disclosure provides a unitary structured abrasive disc, not part of the claimed invention, according to the nineteenth embodiment, wherein the precisely-shaped abrasive elements are curved around a common rotational axis.

As used herein, the term "vitreous bond" includes inorganic ceramics, glasses, and glass-ceramics.

Features and advantages of the present disclosure will be further understood upon consideration of the detailed description as well as the appended claims.

### BRIEF DESCRIPTION OF THE DRAWINGS

FIG. 1 is a schematic process flow diagram of a method of making a vitreous bond abrasive article according to the present disclosure.
FIG. 2 is a schematic cross-sectional top view of an exemplary vitreous bond abrasive wheel 200, preparable according to the present disclosure.
FIG. 3 is a schematic cross-sectional top view of an exemplary vitreous bond abrasive wheel 300, preparable according to the present disclosure.
FIG. 4 is a schematic perspective view of an exemplary vitreous bond abrasive segment 400, preparable according to the present disclosure.
FIG. 5 is a schematic perspective view of a vitreous bond abrasive wheel 500, preparable according to the present disclosure.
FIG. 6A is a schematic perspective view of a unitary structured abrasive disc 600, preparable according to the present disclosure.
FIG. 6B is a schematic top view of unitary structured abrasive disc 600.
FIG. 7A is a schematic perspective view of a unitary structured abrasive disc 700, preparable according to the present disclosure.
FIG. 7B is a schematic top view of unitary structured abrasive disc 700.
FIG. 8 is a schematic perspective view of rotary abrasive tool 800, preparable according to the present disclosure.

Repeated use of reference characters in the specification and drawings is intended to represent the same or analogous features or elements of the disclosure. The figures may not be drawn to scale.

### DETAILED DESCRIPTION

Methods of making vitreous bond abrasive articles according to the present disclosure include a common additive subprocess. The subprocess comprises sequentially, preferably consecutively (although not required) carrying out at least three steps.

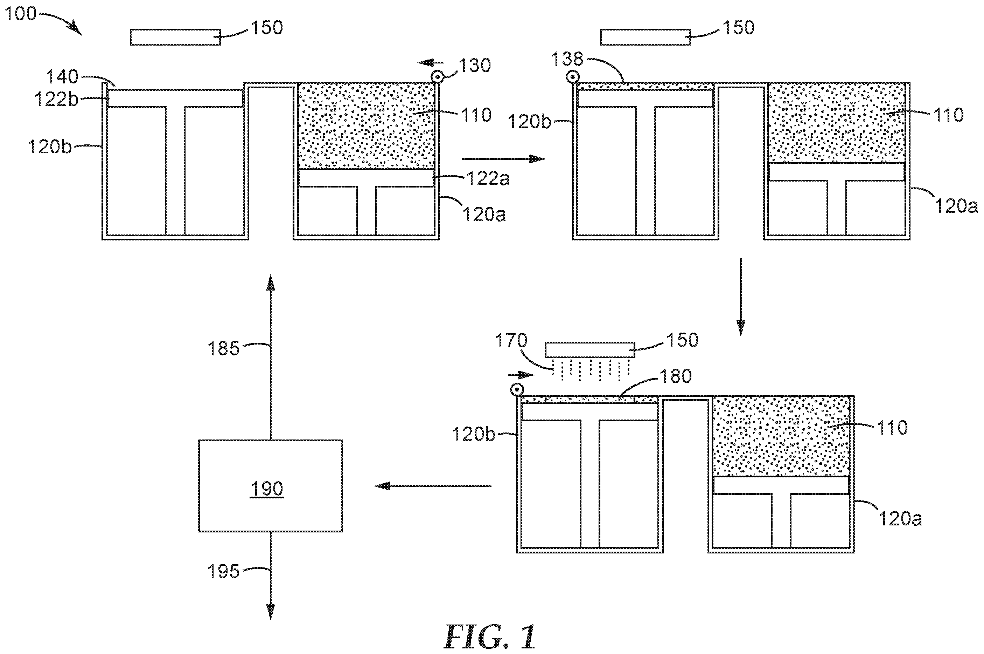

FIG. 1 schematically depicts an exemplary powder bed jetting process 100 used in making a vitreous bond abrasive article.

In the first step, a layer 138 of loose powder particles 110 is deposited in a confined region 140. The layer 138 should be of substantially uniform thickness. For example, the thickness of the layer may vary less than 50 microns, preferably less than 30 microns, and more preferably less than 10 microns. The layers may have any thickness up to about 1 millimeter, as long as the jetted liquid binder precursor material can bind all the loose powder where it is applied. Preferably, the thickness of the layer is from about 10 microns to about 500 microns, 10 microns to about 250 microns, more preferably about 50 microns to about 250 microns, and more preferably from about 100 microns to about 200 microns.

The loose powder particles comprise vitreous bond precursor particles and abrasive particles.

The vitreous bond precursor particles may comprise particles of any material that can be thermally converted into a vitreous material. Examples include glass frit particles, ceramic particles, ceramic precursor particles, and combinations thereof.

The vitreous bond which binds together the abrasive grain in accordance with this disclosure can be of any suitable composition which is known in the abrasives art, for example. The vitreous bond phase, also variously known in the art as a "ceramic bond", "vitreous phase", vitreous matrix", or "glass bond" (e.g., depending on the composition) may be produced from one or more oxide (e.g., a metal oxide and/or boria) and/or at least one silicate as frit (i.e., small particles), which upon being heated to a high temperature react to form an integral vitreous bond phase. Examples include glass particles (e.g., recycled glass frit, water glass frit), silica frit (e.g., sol-gel silica frit), alumina trihydrate particles, alumina particles, zirconia particles, and combinations thereof. Suitable frits, their sources and compositions are well known in the art.

Abrasive articles are typically prepared by forming a green structure comprised of abrasive grain, the vitreous bond precursor, an optional pore former, and a temporary binder. The green structure is then fired. The vitreous bond phase is usually produced in the firing step of the process for producing the abrasive article of this disclosure. Typical firing temperatures are in the range of from 540°C to 1700°C (1000°F to 3100°F). It should be understood that the temperature selected for the firing step and the composition of the vitreous bond phase must be chosen so as to not have a detrimental effect on the physical properties and/or composition of abrasive particles contained in the vitreous bond abrasive article.

Useful glass frit particles may include any glass frit material known for use in vitreous bond abrasive articles. Examples include glass frit selected from the group consisting of silica glass frit, silicate glass frit, borosilicate glass frit, and combinations thereof. In one embodiment, a typical vitreous binding material contains about 70 - 90% SiO₂ + B₂O₃, 1-20% alkali oxides, 1-20% alkaline earth oxides, and 1-20% transition metal oxides. In another embodiment, the vitreous binding material has a composition of about 82 wt% SiO₂ + B₂O₃, 5% alkali metal oxide, 5% transition series metal oxide, 4% Al₂O₃, and 4% alkaline earth oxide. In another embodiment, a frit having about 20% B₂O₃, 60% silica, 2% soda, and 4% magnesia may be utilized as the vitreous binding material. One of skill in the art will understand that the particular components and the amounts of those components can be chosen in part to provide particular properties of the final abrasive article formed from the composition.

The size of the glass frit can vary. For example, it may be the same size as the abrasive particles, or different. Typically, the average particle size of the glass frit ranges from about 0.01 micrometer to about 100 micrometers, preferably about 0.05 micrometer to about 50 micrometers, and most preferably about 0.1 micrometer to about 25 micrometers. The average particle size of the glass frit in relation to the average particle size of the abrasive particles having a Mohs hardness of at least about 5 can vary. Typically, the average particle size of the glass frit is about 1 to about 200 percent of the average particle size of the abrasive, preferably about 10 to about 100 percent, and most preferably about 15 to about 50 percent.

Typically, the weight ratio of vitreous bond precursor particles to abrasive particles in the loose powder particles ranges from about 10:90 to about 90: 10. The shape of the vitreous bond precursor particles can also vary. Typically, they are irregular in shape (e.g., crushed and optionally graded), although this is not a requirement. For example, they may be spheroidal, cubic, or some other predetermined shape.

Preferably, the coefficient of thermal expansion of the vitreous bond precursor particles is the same or substantially the same as that of the abrasive particles.

One preferred vitreous bond has an oxide-based mole percent (%) composition of SiO₂ 63.28; TiO₂ 0.32; Al₂O₃ 10.99; B₂O₃ 5.11; Fe₂O₃ 0.13; K₂O 3.81; Na₂O 4.20; Li₂O 4.98; CaO 3.88; MgO 3.04 and BaO 0.26. Firing of these ingredients is typically accomplished by raising the temperature from room temperature to 1149° C (2100° F) over a prolonged period of time (e.g., about 25-26 hours), holding at the maximum temperature (e.g., for several hours), and then cooling the fired article to room temperature over an extended period of time (e.g., 25-30 hours).

The vitreous bond precursor particles may comprise ceramic particles. In such cases sintering and/or fusing of the ceramic particles forms the vitreous matrix. Any sinterable and/or fusible ceramic material may be used. Preferred ceramic materials include alumina, zirconia, and combinations thereof.

If desired, alpha-alumina ceramic particles may be modified with oxides of metals such as magnesium, nickel, zinc, yttria, rare earth oxides, zirconia, hafnium, chromium, or the like. Alumina and zirconia abrasive particles may be made by a sol-gel process, for example, as disclosed in U.S. Pat. Nos. 4,314,827 (Leitheiser et al.); 4,518,397 (Leitheiser et al.); 4,574,003 (Gerk); 4,623,364 (Cottringer et al.); 4,744,802 (Schwabel); and 5,551,963 (Larmie).

The vitreous bond precursor particles may be present in an amount from 10 to 40 volume percent of the combined volume of the vitreous bond precursor particles and abrasive particles, preferably from 15 to 35 volume percent of the abrasive composition.

It is known in the art to use various additives in the making of vitreous bonded abrasive articles both to assist in the making of the abrasive article and/or improve the performance of such articles. Such conventional additives which may also be used in the practice of this disclosure include but are not limited to lubricants, fillers, pore inducers, and processing aids. Examples of lubricants include, graphite, sulfur, polytetrafluoroethylene and molybdenum disulfide. Examples of pore inducers include glass bubbles and organic particles. Concentrations of the additives as are known in the art may be employed for the intended purpose of the additive, for example. Preferably, the additives have little or no adverse effect on abrasive particles employed in the practice of this disclosure.

The loose powder particles may optionally be modified to improve their flowability and the uniformity of the layer spread. Methods of improving the powders include agglomeration, spray drying, gas or water atomization, flame forming, granulation, milling, and sieving. Additionally, flow agents such as, for example, fumed silica, nanosilica, stearates, and starch may optionally be added.

The vitreous bond precursor particles may comprise a ceramic precursor (e.g., a precursor of alumina or zirconia) such as, for example, bauxite, boehmite, calcined alumina, or calcined zirconia that when fired converts to the corresponding ceramic form.

Procedures and conditions known in the art for producing vitreous bonded abrasive articles (e.g., grinding wheels), and especially procedures and conditions for producing vitreous bond abrasive articles, may be used to make the abrasive articles of this disclosure. These procedures may employ conventional and well known equipment in the art.

The abrasive particles may comprise any abrasive particle used in the abrasives industry. Preferably, the abrasive particles have a Mohs hardness of at least 4, preferably at least 5, more preferably at least 6, more preferably at least 7, more preferably at least 8, more preferably at least 8.5, and more preferably at least 9. In certain embodiments, the abrasive particles comprise superabrasive particles. As used herein, the term "superabrasive" refers to any abrasive particle having a hardness greater than or equal to that of silicon carbide (e.g., silicon carbide, boron carbide, cubic boron nitride, and diamond).

Specific examples of suitable abrasive materials include aluminum oxide (e.g., alpha alumina) materials (e.g., fused, heat-treated, ceramic, and/or sintered aluminum oxide materials), silicon carbide, titanium diboride, titanium nitride, boron carbide, tungsten carbide, titanium carbide, aluminum nitride, diamond, cubic boron nitride (CBN), garnet, fused alumina-zirconia, sol-gel derived abrasive particles, cerium oxide, zirconium oxide, titanium oxide, and combinations thereof. Examples of sol-gel derived abrasive particles can be found in U.S. Pat. No. 4,314,827 (Leitheiser et al.), U.S. Pat. No. 4,623,364 (Cottringer et al.); U.S. Pat. No. 4,744,802 (Schwabel), U.S. Pat. No. 4,770,671 (Monroe et al.); and U.S. Pat. No. 4,881,951 (Monroe et al.). Agglomerate abrasive particles that comprise finer abrasive particles in a vitreous bond matrix (e.g., as described in U.S. Pat. No. 6,551,366 (D'Souza et al.)) may also be used.

In order to achieve fine resolution, the loose powder particles are preferably sized (e.g., by screening) to have a maximum size of less than or equal to 400 microns, preferably less than or equal to 250 microns, more preferably less than or equal to 200 microns, more preferably less than or equal to 150 microns, less than or equal to 100 microns, or even less than or equal to 80 microns, although larger sizes may also be used. The vitreous bond precursor particles, abrasive particles, and any optional additional particulate components may have the same or different maximum particle sizes, D₉₀, D₅₀, and/or D₁₀ particle size distribution parameters.

The loose powder particles may optionally further comprise other components such as, for example, pore inducers, and/or filler particles. Examples of pore inducers include glass bubbles and organic particles.

Next, a liquid binder precursor material 170 is jetted by printer 150 onto predetermined region(s) 180 of layer 138. The liquid binder precursor material thus coats the loose powder particles in region 180, and is subsequently converted to a binder material that binds the loose powder particles in region 180 to each other. The liquid binder precursor material may be any composition that can be converted (e.g., by evaporation, or thermal, chemical, and/or radiation curing (e.g., using UV or visible light)) into a binder material that bonds the loose powder particles together according to the jetted pattern (and ultimate 3-D shape upon multiple repetitions).

The liquid binder precursor material comprises a liquid vehicle having a polymer dissolved therein. The liquid may include one or more of organic solvent and water. Exemplary organic solvents include alcohols (e.g., butanol, ethylene glycol monomethyl ether), ketones, and ethers, preferably having a flash point above 100°C.

Selection of a suitable solvent or solvents will typically depend upon requirements of the specific application, such as desired surface tension and viscosity, the selected particulate solid, for example.

The liquid vehicle can be entirely water, or can contain water in combination with one or more organic solvents. Preferably, the aqueous vehicle contains, on a total weight basis, at least 20 percent water, at least 30 percent water, at least 40 percent water, at least 50 percent water, or even at least 75 percent water.

In some embodiments, one or more organic solvents may be included in the liquid vehicle, for instance, to control drying speed of the liquid vehicle, to control surface tension of the liquid vehicle, to allow dissolution of an ingredient (e.g., of a surfactant), or, as a minor component of any of the ingredients; e.g., an organic co-solvent may be present in a surfactant added as an ingredient to the liquid vehicle. Exemplary organic solvents include: alcohols such as methyl alcohol, ethyl alcohol, n-propyl alcohol, isopropyl alcohol, n-butyl alcohol, sec-butyl alcohol, t-butyl alcohol, and isobutyl alcohol; ketones or ketoalcohols such as acetone, methyl ethyl ketone, and diacetone alcohol; esters such as ethyl acetate and ethyl lactate; polyhydric alcohols such as ethylene glycol, diethylene glycol, triethylene glycol, propylene glycol, butylene glycol, 1,4-butanediol, 1,2,4-butanetriol, 1,5-pentanediol, 1,2,6-hexanetriol, hexylene glycol, glycerol, glycerol ethoxylate, trimethylolpropane ethoxylate; lower alkyl ethers such as ethylene glycol methyl or ethyl ether, diethylene glycol ethyl ether, triethylene glycol methyl or ethyl ether, ethylene glycol n-butyl ether, diethylene glycol n-butyl ether, diethylene glycol methyl ether, ethylene glycol phenyl ether, propylene glycol methyl ether, dipropylene glycol methyl ether, tripropylene glycol methyl ether, propylene glycol methyl ether acetate, dipropylene glycol methyl ether acetate, propylene glycol n-propyl ether, dipropylene glycol n-propyl ether, tripropylene glycol n-propyl ether, propylene glycol n-butyl ether, dipropylene glycol n-butyl ether, tripropylene glycol n-butyl ether, propylene glycol phenyl ether, and dipropylene glycol dimethyl ether; nitrogen-containing compounds such as 2-pyrrolidinone and N-methyl-2-pyrrolidinone; sulfur-containing compounds such as dimethyl sulfoxide, tetramethylene sulfone, and thioglycol; and combinations of any of the foregoing.

The amounts of organic solvent and/or water within the liquid vehicle can depend on a number of factors, such as the particularly desired properties of the liquid binder precursor material such as the viscosity, surface tension, and/or drying rate, which can in turn depend on factors such as the type of ink jet printing technology intended to be used with the liquid vehicle ink, such as piezo-type or thermal-type printheads, for example.

The liquid binder precursor material may include a polymer that is soluble or dispersible in the liquid vehicle. Examples of suitable polymers may include polyvinyl pyrrolidones, polyvinyl caprolactams, polyvinyl alcohols, polyacrylamides, poly(2-ethyl-2-oxazoline) (PEOX), polyvinyl butyrate, copolymers of methyl vinyl ether and maleic anhydride, certain copolymers of acrylic acid and/or hydroxyethyl acrylate, methyl cellulose, natural polymers (e.g., dextrin, guar gum, xanthan gum). Of these, polyvinyl pyrrolidones are preferred for use with liquid vehicles that are predominantly water. Other organic polymers than those listed above may be used instead or in addition if desired.

The liquid binder precursor material may include one or more free-radically polymerizable or otherwise radiation-curable materials; for example, acrylic monomers and/or oligomers and/or epoxy resins. An effective amount of photoinitiator and/or photocatalysts for curing the free-radically polymerizable or otherwise radiation-curable materials may also be included. Examples of suitable (meth)acrylate monomers and oligomers and otherwise radiation-curable materials (e.g., epoxy resins) can be found in, for example, U.S. Pat. No. 5,766,277 (DeVoe et al.).

In some preferred embodiments, the liquid binder precursor material is essentially free of (e.g., contains less than 1 percent, less than 0.1 percent, less than 0.01 percent, or is even free of) metal nanoparticles and/or metal oxide nanoparticles. As used herein, the term "nanoparticles" refers to particles having an average particle diameter of less than or equal to one micron; for example less than or equal to 500 nanometers (nm), or even less than or equal to 150 nm.

Alternatively, or in addition, the liquid binder precursor may be an aqueous sol comprising a ceramic precursor for alumina and/or zirconia. Examples include aqueous boehmite sols and zirconia sols. In such cases, after firing, the liquid binder precursor may have the same or different composition as the abrasive particles. Details concerning zirconia sols can be found, for example, in U. S. Pat. No. 6,376,590 (Kolb et al.). Details concerning boehmite sols can be found, for example, in U.S. Pat. Nos. 4,314, 827 (Leitheiser et al.), 5,178,849 (Bauer) 4,518,397 (Leitheiser et al.), 4,623,364 (Cottringer et al.), 4,744,802 (Schwabel), 4,770,671 (Monroe et al.), 4,881,951 (Wood et al.), 4,960,441 (Pellow et al.) 5,011,508 (Wald et al.), 5,090,968 (Pellow), 5,139,978 (Wood), 5,201,916 (Berg et al.), 5,227,104 (Bauer), 5,366,523 (Rowenhorst et al.), 5,429,647 (Larmie), 5, 547,479 (Conwell et al.), 5,498,269 (Larmie), 5,551,963 (Larmie), 5,725,162 (Garg et al.), and 5,776,214 (Wood)).

The jetted liquid binder precursor material is converted into a binder material that bonds together the loose powder particles in predetermined regions of the loose powder particles to form a layer of bonded powder particles; for example, by evaporation of a liquid vehicle in the liquid binder precursor material. Heating the binder material to sufficiently high temperature causes it to volatilize and/or decompose (e.g., "burn out") during a subsequent firing step. Cooling may be accomplished by any means known to the art (e.g., cold quenching or air cooling to room temperature).

Referring again to FIG. 1, the jetted liquid binder precursor material 170 is converted (step 190) into a binder material that bonds together the loose powder particles in at least one predetermined region of the loose powder particles to form a layer of bonded powder particles; for example, by evaporation of a liquid vehicle in the liquid binder precursor material. Heating the binder material to sufficiently high temperature causes it to volatilize and/or decompose (e.g., "burn out") during subsequent sintering or infusion steps.

The above steps are then repeated (step 185) with changes to the region where jetting is carried out according to a predetermined design resulting through repetition, layer on layer, in a three-dimensional (3-D) abrasive article preform. In each repetition, the loose powder particles and the liquid binder precursor material may be independently selected; that is, either or both or the loose powder particles and the liquid binder precursor material may be the same as, or different from those in adjacent deposited layers.

The abrasive article preform comprises the bonded powder particles and remaining loose powder particles. Once sufficient repetitions have been carried out to form the abrasive article preform, it is preferably separated from substantially all (e.g., at least 85 percent, at least 90 percent, preferably at least 95 percent, and more preferably at least 99 percent) of the remaining loose powder particles, although this is not a requirement.

If desired, multiple particle reservoirs each containing a different powder may be used. Likewise, multiple different liquid binder precursor materials may be used, either through a common printhead or, preferably, through separate printheads. This results in different powders/binders distributed in different and discrete regions of the vitrified bond abrasive article. For example, relatively inexpensive, but lower performing abrasive particles and or vitreous bond precursor particles may be relegated to regions of the vitrified bond abrasive article where it is not particularly important to have high performance properties (e.g., in the interior away from the abrading surface).

Generally, vitreous bond abrasive articles made in such ways have considerable porosity throughout their volumes. Accordingly, the abrasive article preform may then be infused with a solution or dispersion of additional vitreous bond precursor material, or grain growth modifiers.

Powder bed jetting equipment suitable for practicing the present disclosure is commercially available, for example, from ExOne, North Huntington, Pennsylvania. Further details concerning powder bed jetting techniques suitable for practicing the present disclosure can be found, for example, in U.S. Pat. Nos. 5,340,656 (Sachs et al.) and 6,403,002 B1 (van der Geest).

Advantageously, methods according to the present disclosure are suitable for manufacturing various vitreous bond abrasive articles that cannot be readily or easily fabricated by other methods. For example, inclusion of internal voids is possible as long as an opening to the exterior of the abrasive preform exists for removal of unbonded loose powder. Accordingly, cooling channels having tortuous and or arcuate paths can be readily manufactured using methods of the present disclosure. Cooling channels are open to the exterior of the vitreous bond abrasive article. In some embodiments, they have a single opening, but more typically they have two or more openings. A cooling medium (e.g., air, water or oil) circulates through the cooling channel(s) to remove heat generated during abrading.

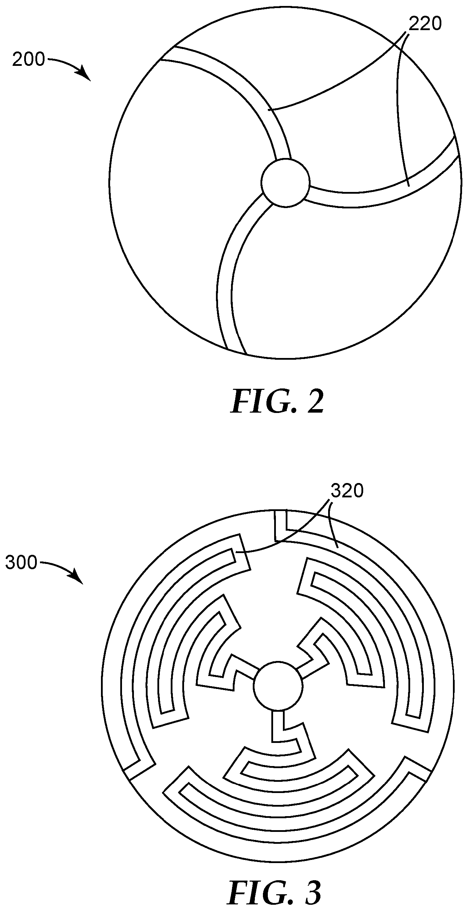

Referring now to FIG. 2, exemplary vitreous bond abrasive wheel 200 has arcuate and tortuous cooling channels 210, respectively.

FIG. 3 shows another exemplary vitreous bond abrasive wheel 300 that has tortuous cooling channels 320.

Vitreous bond abrasive articles preparable according to methods of the present disclosure include essentially any known vitreous bond abrasive article; for example, unitary structured abrasive discs, grinding bits, abrasive segments, shaped abrasive particles (e.g., triangular abrasive particles), and abrasive wheels as well as many hitherto unknown vitreous bond abrasive articles.

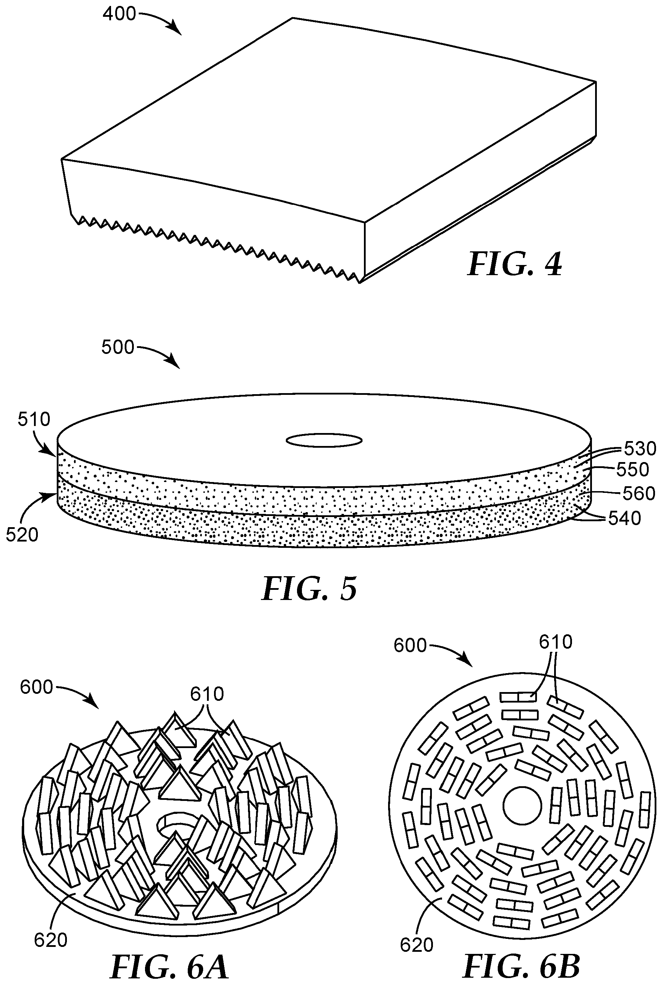

FIG. 4 shows an exemplary vitreous bond abrasive segment 400. In typical use, multiple vitreous bond abrasive segments 400 are mounted evenly spaced along the circumference of a metal disc to form an abrasive wheel.

FIG. 5 shows a vitreous bond abrasive disc 500 has two regions 510, 520. Each region has abrasive particles 530, 540 retained in a vitreous bond matrix material 550, 560, respectively.

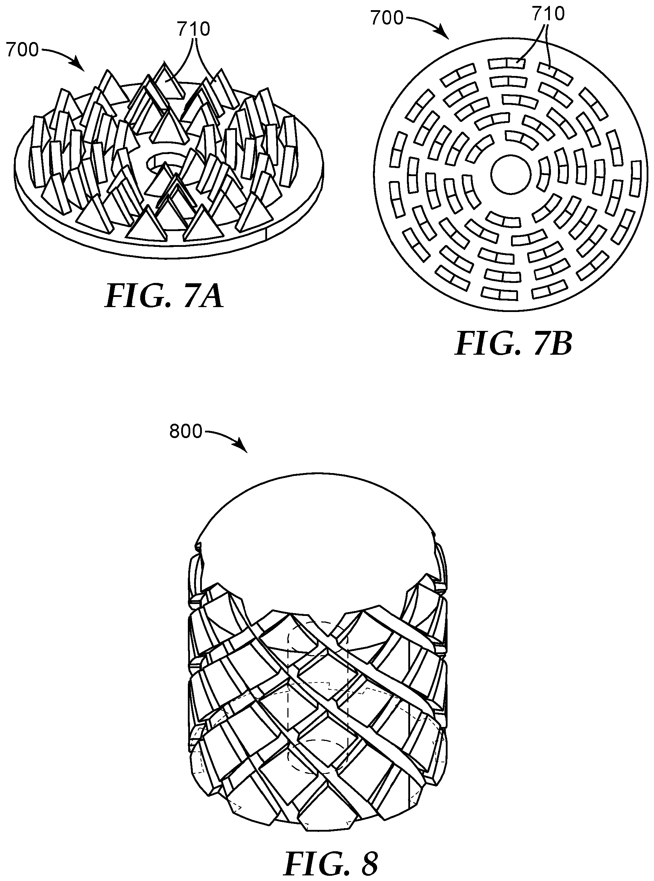

FIGS. 6A-6B and 7A-7B, respectively show various unitary structured abrasive discs with precisely-shaped ceramic abrasive elements 610, 710 formed integrally with ceramic planar bases 620, 720.

FIG. 8 shows a rotary abrasive tool 800 (a bit for a handheld motor driven shaft such as, for example, a Dremel tool).

The foregoing vitreous abrasive wheels shown in FIGS. 2 and 3 can be prepared by firing corresponding green bodies (i.e., having the same general shape features, but comprising a vitreous bond precursor particles held together by a temporary binder).

Objects and advantages of this disclosure are further illustrated by the following non-limiting examples, but the particular materials and amounts thereof recited in these examples, as well as other conditions and details, should not be construed to unduly limit this disclosure.

### EXAMPLES

Unless otherwise noted, all parts, percentages, ratios, etc. in the Examples and the rest of the specification are by weight. In the Examples: °C = degrees Celsius, g = grams, min = minute, mm = millimeter, sec = second, and rpm = revolutions per minute.

Table 1, below, lists abbreviations for materials used in the Examples.

**TABLE 1**

| ABBREVIATION | DESCRIPTION |
|---|---|
| PDR1 | 200/230 Mesh, D76 CMD diamond, from Pinnacle Abrasives, Santa Rosa, California |
| PDR2 | ALODUR BFRPL aluminium oxide particles, grade P320, from Treibacher Schleifmittel AG, Villach, Austria |
| PDR3 | SP1086 glass powder from Specialty Glass Inc., Oldsmar, Florida |
| PDR4 | A mix of 98.5% vitrified bond VO82069 from Reimbold & Strick, Cologne, Germany and 1.5% color stain for glazes K90084 from Reimbold & Strick, Cologne, Germany |
| PDR5 | MB-M1, 2-4 micron diamond powder from WorldWide Superabrasives, LLC, Boynton Beach, Florida |
| PDR6 | A mixture of 22.2 wt. % of silicon carbide, 280 grit, 8.8 wt. % of boron carbide, 280 grit, from Washington Mills Electro Minerals, Niagara Falls, New York and 70 wt. % of PDR3 |
| PDR7 | CAB-O-SIL CT-1221 fumed silica from Cabot Corporation, Boston, Massachusetts |
| PDR8 | PWA 4000, 3 micron aluminum oxide powder from Fujimi Corporation, Tualatin, Oregon |
| PDR9 | A-16 SG thermally reactive superground alumina powder from Almatis Company, Frankfurt, Germany |
| PDR10 | Cornstarch powder, obtained from ConAgra Foods Inc., Omaha, Nebraska |
| AG1 | Diamond agglomerate made from agglomerating PDR5 according to the *Agglomeration Procedure* described herein below |
| AG2 | Aluminum oxide agglomerate made from agglomerating PDR8 according to the *Agglomeration Procedure* described below |
| BIN | Ether solvent-based polymer binder, obtained as PM-B-SR1-04 from The ExOne Company, North Huntingdon, Pennsylvania |

### AGGLOMERATION PROCED URE

Abrasive particles (PDR5 or PDR8) were agglomerated with the binder matrix PDR3 to form agglomerates (AG1 or AG2, respectively) with sizes that ranged from 5 micrometers to 45 micrometers using a spray drying atomization method described as follows. A mixture containing the following components was blended with the help of a laboratory ultrasonic bath: 123.0 grams (g) of a 25 wt. % aqueous dextrin solution, 100.0 g of PDR3, 90.0 g of PDR5 (to make AG1) or PDR8 (to make AG2), 295.0 g of distilled water, 1.9 g of N-octadecyl sulfosuccinamate (obtained as CYANASOL AY from American Cyanamid Co., Wayne, New Jersey). The mixture was then atomized in a centrifugal atomizer (Mobile Minor from Niro Inc., Columbia, Maryland). The atomization wheel was running at 20000 rpm. Air supplied at 200°C into the atomization chamber was used to dry the particles as they formed into droplets. The particles were then collected using a cyclone equipped with the atomizer and sieved through a 45 micrometer sieve to remove the coarser particles.

### EXAMPLE 1

A print material was prepared by mixing, based on the mixture weight, 80 wt. % of PDR1 and 20 wt. % of PDR3. The print material was filled into the build box of an X1-LAB 3D printer, obtained from The ExOne Company, North Huntingdon, Pennsylvania. The binder supply bottle of the printer was filled with BIN. 3D printing according to design parameters shown in FIG. 8 (OD = 13 mm, ID = 3 mm) was executed using printing protocol and procedures according to the manufacturer's operating instructions using the following operation parameters: layer height = 100 microns, spreader speed = 1 mm/sec, printing saturation = 70% level, and drying time = 45 sec at 90% heater power. After printing was finished, the printed object and the powder bed were extracted from the printer and placed into an ambient atmosphere oven to cure for 2 hours at 195°C. After cooling down to 23°C, the printed object was removed from the powder bed and loose powder was removed using a soft bristle brush. The object was then placed into a furnace and burned out at 400°C for 2 hours, followed by sintering at 700°C for 4 hours, resulting in an abrasive bit suitable for use with a handheld rotary tool device (e.g., Dremel rotary tool for Robert Bosch Tool Corp., Mount Prospect, Illinois).

### EXAMPLE 2

A print material was prepared by mixing, based on the mixture weight, 85 wt. % of PDR2 and 15 wt. % of PDR4. The procedure generally described in Example 1 was repeated, except that: spreader speed = 10 mm/sec, printing saturation = 130% level, drying time = 55 sec at 90% heater power, and furnace sintering temperature = 900°C for 4 hours.

### EXAMPLE 3

A print material was prepared by mixing, based on the mixture weight, 80 wt. % of AG1 and 20 wt. % of PDR3. The procedure generally described in Example 1 was repeated, except printing saturation = 150% level, drying time = 25 sec at 90% heater power, and furnace sintering temperature = at 630°C for 4 hours.

### EXAMPLE 4

A print material was prepared by mixing, based on the mixture weight, 83.0 wt. % of PDR6, 16.9 wt. % of AG1, and 0.1 wt. % of PDR7. The procedure described in Example 1 was repeated, except that printing saturation = 125% level, drying time = 60 sec at 90% heater power, and furnace sintering temperature = 600°C for 4 hours.

### EXAMPLE 5

A print material was prepared by mixing, based on the mixture weight, 80 wt. % of AG2 and 20 wt. % of PDR3. The procedure described in Example 4 was repeated, except that the furnace sintering temperature was set at 630°C for 4 hours.

The vitreous bond abrasive articles from Examples 1 to 5 were evaluated for abrasive performance against a variety of materials, such as aluminum, a microscopy glass slide, and a piece of wood. In some cases, rotary tools were assembled on a mandrel and tested with a Dremel handheld rotary tool. All the objects were effective for abrading the materials.

### EXAMPLE 6

The procedure described in Example 1 was repeated, except that: the article design was an equilateral triangle (3 mm sides, 0.6 thickness); the print powder material was prepared by sifting PDR9 first through a sieve with 180 micron openings, then through a sieve with 62 micron openings; layer height = 100 microns; powder ratio = 1.6; spreader speed = 15 mm/sec; printing saturation = 160% level; drying time = 60 sec; after cooling down to 23°C, the printed object was removed from the powder using a 300 micron sieve instead of a brush; and the object was then fired in a furnace heated at a rate of 5°C/min to a final temperature of 1500°C where it was held for 20 min.

### EXAMPLE 7

A print powder material was prepared by mixing 80 wt. % of PDR9 and 20 wt. % of PDR10 (percentages based on the mixture weight) and sifting first through a sieve with 180 micron openings, then through a sieve with 62 micron openings. The procedure generally described in Example 6 was repeated, except that: spreader speed = 1.0 mm/sec, printing saturation = 140% level, drying time = 40 sec, and the furnace was heated at a rate of 5°C/min to a final temperature of 1555°C.

The preceding description, given in order to enable one of ordinary skill in the art to practice the claimed disclosure, is not to be construed as limiting the scope of the disclosure, which is defined by the claims.

## Claims

1. A method of making a vitreous bond abrasive article, the method comprising sequential steps:
a) a subprocess comprising sequentially:
i) depositing a layer (138) of loose powder particles (110) in a confined region (140), wherein the loose powder particles (110) comprise vitreous bond precursor particles and abrasive particles, and wherein the layer (138) of loose powder particles (110) has substantially uniform thickness;
ii) jetting a liquid temporary binder precursor material (170) in predetermined regions (180) of the layer (138) of loose powder particles (110), wherein the temporary liquid binder comprises a liquid vehicle having a polymer dissolved or dispersed therein;
iii) converting the liquid temporary binder precursor material (170) into a temporary binder material that bonds together particles of the loose powder particles (110) in the predetermined regions (180) to form a layer of bonded powder particles;
b) independently carrying out step a) a plurality of times to generate an abrasive article preform comprising the bonded powder particles and remaining loose powder particles (110), wherein in each step a), the loose powder particles (110) are independently selected and the liquid binder precursor material (170) is independently selected;
c) separating substantially all of the remaining loose powder particles (110) from the abrasive article preform;
d) heating the abrasive article preform to provide the vitreous bond abrasive article comprising the abrasive particles retained in a vitreous bond material, wherein heating causes the temporary binder to volatilize and/or decompose.

2. The method of claim 1, wherein the abrasive particles comprise at least one of diamond particles or cubic boron nitride particles.

3. The method of claim 1, wherein the abrasive particles comprise metal oxide ceramic particles.

4. The method of any one of claims 1 to 3, wherein the vitreous bond abrasive article includes at least one cooling channel (210, 320).

5. The method of any one of claims 1 to 4, wherein the vitreous bond abrasive article is selected from the group consisting of a unitary structured abrasive disc (600, 700), an abrasive grinding bit, abrasive segments (400), and an abrasive wheel (200, 300, 500).

## Patentansprüche

1. Ein Verfahren zum Herstellen eines Glasbindungsschleifgegenstands, das Verfahren aufweisend die aufeinanderfolgenden Schritte:
a) einen Unterprozess, aufweisend aufeinanderfolgend:
i) Abscheiden einer Schicht (138) aus losen Pulverteilchen (110) in einer begrenzten Region (140), wobei die losen Pulverteilchen (110) Glasbindungsvorläuferteilchen und Schleifteilchen aufweisen und wobei die Schicht (138) aus losen Pulverteilchen (110) im Wesentlichen eine gleichmäßige Dicke hat;
ii) Aufsprühen eines flüssigen temporären Bindemittelvorläufermaterials (170) in zuvor bestimmten Regionen (180) der Schicht (138) aus losen Pulverteilchen (110), wobei das temporäre flüssige Bindemittel ein flüssiges Vehikel aufweist, das ein darin gelöstes oder dispergiertes Polymer hat;
iii) Umwandeln des flüssigen temporären Bindemittelvorläufermaterials (170) in ein temporäres Bindemittelmaterial, das Teilchen der losen Pulverteilchen (110) in den zuvor bestimmten Regionen (180) aneinander bindet, um eine Schicht aus gebundenen Pulverteilchen zu bilden;
b) unabhängiges Durchführen von Schritt a) eine Mehrzahl von Malen, um einen Schleifgegenstandsvorformling zu erzeugen, aufweisend die gebundenen Pulverteilchen und verbleibende lose Pulverteilchen (110), wobei die losen Pulverteilchen (110) in jedem Schritt a) unabhängig ausgewählt werden und das flüssige Bindemittelvorläufermaterial (170) unabhängig ausgewählt wird;
c) Trennen von im Wesentlichen allen der verbleibenden losen Pulverteilchen (110) von dem Schleifgegenstandsvorformling;
d) Erwärmen des Schleifgegenstandsvorformlings, um den Glasbindungsschleifgegenstand bereitzustellen, aufweisend die Schleifteilchen, die in einem Glasbindungsmaterial zurückgehaltenen werden, wobei das Erwärmen bewirkt, dass sich das temporäre Bindemittel verflüchtigt und/oder zersetzt.

2. Das Verfahren nach Anspruch 1, wobei die Schleifteilchen mindestens eines von Diamantteilchen oder Teilchen aus kubischem Bornitrid aufweisen.

3. Das Verfahren nach Anspruch 1, wobei die Schleifteilchen Metalloxidkeramikteilchen aufweisen.

4. Das Verfahren nach einem der Ansprüche 1 bis 3, wobei der Glasbindungsschleifgegenstand mindestens einen Kühlkanal (210, 320) einschließt.

5. Das Verfahren nach einem der Ansprüche 1 bis 4, wobei der Glasbindungsschleifgegenstand aus der Gruppe ausgewählt ist, bestehend aus einem einheitlich strukturierten Schleifteller (600, 700), einer Schleifmahlspitze, Schleifsegmenten (400) und einer Schleifscheibe (200, 300, 500).

## Revendications

1. Procédé de fabrication d'un article abrasif à liaison vitreuse, le procédé comprenant des étapes séquentielles :
a) un processus secondaire comprenant séquentiellement :
i) le dépôt d'une couche (138) de particules de poudre libre (110) dans une région confinée (140), dans lequel les particules de poudre libre (110) comprennent des particules de précurseur à liaison vitreuse et des particules abrasives, et dans lequel la couche (138) de particules de poudre libre (110) a une épaisseur sensiblement uniforme ;
ii) la projection d'un matériau précurseur de liant liquide temporaire (170) dans des régions prédéterminées (180) de la couche (138) de particules de poudre libre (110), dans lequel le liant liquide temporaire comprend un véhicule liquide dans lequel un polymère est dissous ou dispersé ;
iii) la conversion du matériau précurseur de liant liquide temporaire (170) en un matériau liant temporaire qui lie les particules de poudre libre (110) dans les régions prédéterminées (180) pour former une couche de particules de poudre liées ;
b) la réalisation indépendante de l'étape a) une pluralité de fois pour générer une préforme d'article abrasif comprenant les particules de poudre liées et des particules de poudre libre (110) restantes, dans lequel dans chaque étape a), les particules de poudre libre (110) sont indépendamment choisies, et le matériau précurseur de liant liquide (170) est indépendamment choisi ;
c) la séparation sensiblement de la totalité des particules de poudre libre (110) restantes à partir de la préforme d'article abrasif ;
d) le chauffage de la préforme d'article abrasif pour obtenir l'article abrasif à liaison vitreuse comprenant les particules abrasives retenues dans un matériau à liaison vitreuse, dans lequel le chauffage amène le liant temporaire à se volatiliser et/ou à se décomposer.

2. Procédé selon la revendication 1, dans lequel les particules abrasives comprennent au moins l'une parmi des particules de diamant ou des particules de nitrure de bore cubique.

3. Procédé selon la revendication 1, dans lequel les particules abrasives comprennent des particules céramiques d'oxyde métallique.

4. Procédé selon l'une quelconque des revendications 1 à 3, dans lequel l'article abrasif à liaison vitreuse comporte au moins un canal de refroidissement (210, 320).

5. Procédé selon l'une quelconque des revendications 1 à 4, dans lequel l'article abrasif à liaison vitreuse est choisi dans le groupe constitué d'un disque abrasif structuré de manière unitaire (600, 700), d'une mèche de meulage abrasive, de segments abrasifs (400), et d'une meule abrasive (200, 300, 500).
